# FASCICULE DE BREVET EUROPEEN

(11) **EP 1 586 428 B1**
(45) Date de publication et mention de la délivrance du brevet: **05.08.2009**
(21) Numéro de dépôt: 05290488.5
(22) Date de dépôt: 04.03.2005
(51) Int. Cl.: A21D 15/06, B26D 7/27

(54) **Procédé et installation de fabrication de pain de mie tranché sans croute.**
Verfahren zur Herstellung von Toastbrot ohne Kruste, und Anlage zur Durchführung dieses Verfahrens
Process for the preparation of toast bread without crust, and installation for carrying out this process

(30) Priorité: 26.03.2004 FR 0403120
(43) Date de publication de la demande: 19.10.2005
(73) Titulaire: Harry's France S.A.S., 36004 Chateauroux Cedex (FR)
(72) Inventeur: Maucotel, Thierry, 85100 Les sables d'Olonne (FR); Gauthier, Jean-Bernard, 36130 Coings (FR)
(74) Mandataire: Chameroy, Claude

(56) Documents cités:
- EP-A- 0 312 978
- GB-A- 1 435 278
- GB-A- 2 338 168

## Description

La présente invention concerne un procédé de fabrication de pain de mie tranché sans croûte. Elle a trait également à une installation pour la mise en oeuvre de ce procédé.

A sa sortie du four de cuisson, le pain de mie est de façon classique refroidi jusqu'à une température à coeur comprise entre 20 et 30° C, dans une ambiance à 45-55 % d'hygrométrie et une température qui peut varier entre 15 et 35° C. Il est ensuite tranché, avec une épaisseur de tranche comprise entre 9 et 15 mn, puis emballé. Lors du tranchage, on peut éliminer les deux tranches situées aux extrémités du pain, c'est-à-dire les talons, ou bien les conserver et les emballer avec le reste du pain.

Des procédés similaires ont également été décrits dans les documents GB-A-2 338 168 et EP-A-0 312 978 sans donner entièrement satisfaction. On a également essayé de fabriquer des pains de mie tranchés sans croûte, en intégrant une étape d'élimination des quatre croûtes latérales extérieures entre le refroidissement et le tranchage final. Toutefois, les différentes tentatives se sont révélées jusqu'à présent infructueuses, et ce pour plusieurs raisons.

D'abord, le pain étant privé de sa croûte extérieure, sa mie, encore tièdes et moelleuse à l'issue du refroidissement, montre des caractéristiques physiques collantes. Ceci se manifeste par une adhérence du pain sur l'ensemble des convoyeurs de la ligne de fabrication. Il en résulte un mauvais acheminement des pains jusqu'à la trancheuse, générant des pains tassés, déformés ou écrasés.

Ensuite, l'élimination de la croûte extérieure élimine la rigidité du produit, rigidité qui lui est conférée par la croûte séchée et durcie. Il en résulte une déformation du pain dans les lames de la trancheuse : les pains s'accumulent, se tassent les uns sur les autres, et les phénomènes de perte de glissant cités plus haut accentuent ce phénomène. Au lieu d'obtenir en sortie de lames des pains dont la forme de section carrée est préservée, on obtient des pains écrasés, collés. Pire, en quelques minutes, un amas de mie provoque un bourrage et un arrêt du tranchage.

En fin, les essais réalisés en laboratoire, avec d'infinies précautions, ont montré une forte accélération de la vitesse d'apparition de moisissures sur le produit. Quand un pain tranché, avec croûte, d'une recette donnée, est sujet aux moisissures à 16-20 jours, les produits sans croûte réalisés au laboratoire - avec une recette identique - ont montré des apparitions de moisissures à 7-9 jours, ce qui est rédhibitoire dans la plupart des cas.

La présente invention a donc pour but principal de remédier à ces inconvénients et, pour ce faire, elle a pour objet un procédé de fabrication de pain de mie tranché sans croûte qui se caractérise essentiellement en ce qu'il consiste, après élimination des croûtes extérieures et avant tranchage, à soumettre le pain de mie à un rayonnement infrarouge pendant une durée déterminée.

Le traitement infrarouge génère, en périphérie du pain de mie, une fine croûte qui, sans être colorée, est cependant suffisamment durcie et déshydratée pour lui conférer des qualités de glisse et de rigidité permettant de le convoyer sans difficulté et de le trancher.

On notera en outre que le traitement infrarouge réalise une pasteurisation de surface qui réduit considérablement les risques de contamination et augmente par conséquent la durée de conservation.

De préférence, le rayonnement infrarouge est appliqué sur le pain de mie en deux phases, d'abord sur deux de ses grandes faces opposées, puis sur les deux autres faces.

Dans une forme de réalisation particulière de l'invention, le rayonnement infrarouge appliqué est un rayonnement infrarouge court dont la longueur d'onde est comprise entre 760 et 2000 nanomètres, appliqué pendant une durée comprise entre 10" et 60" lors de la première phase et pendant une durée comprise entre 5" et 60" lors de la deuxième phase.

En variante, le rayonnement infrarouge appliqué est un rayonnement infrarouge moyen dont la longueur d'onde est comprise entre 2000 et 6000 nanomètres, appliqué pendant une durée comprise entre 10" et 120" lors de la première phase et pendant une durée comprise entre 5" et 100" lors de la deuxième phase.

Selon encore une autre variante, le rayonnement infrarouge appliqué est une combinaison de rayonnement infrarouge moyen et de rayonnement infrarouge court.

Une installation pour la mise en oeuvre du procédé selon l'invention comprenant notamment, à la sortie du four de cuisson, un poste d'élimination des croûtes, où les quatre croûtes latérales du pain de mie sont éliminées par deux passages successifs entre des lames de coupe, suivi d'un poste de tranchage, où le pain de mie est tranché avant d'être emballé, est essentiellement **caractérisé en ce qu**'elle comprend en outre, entre le poste d'élimination des croûtes et le poste de tranchage, un poste de traitement à l'infrarouge, où le pain de mie est soumis à un rayonnement infrarouge pendant une durée prédéterminée.

Dans une forme de réalisation particulière de l'invention, le poste de traitement à l'infrarouge est équipé de panneaux infrarouge disposés horizontalement au-dessus et au-dessous du trajet des pains de mie.

De préférence, le poste de traitement infrarouge comporte deux paires de panneaux infrarouge successives et, entre ces deux paires de panneaux, un dispositif pour faire basculer le pain de mie de 90°, permettant ainsi d'appliquer le rayonnement infrarouge en deux phases distinctes.

Une forme d'exécution de l'invention est décrite ci-après à titre d'exemple, en référence aux dessins annexés dans lesquels :
- la figure 1 est une vue schématique en plan d'une partie de la chaîne de fabrication du pain de mie tranché sans croûte conforme à l'invention ;
- la figure 2 est une vue à plus grande échelle en élévation, suivant la ligne II-II de la figure 1, du poste où sont éliminés les croûtes extérieures du pain de mie ;
- la figure 3 est une vue de détail, suivant la ligne III-III de la figure 2, de l'un des deux dispositifs de tranchage des croûtes extérieures ; et
- la figure 4 est une vue en élévation, suivant la ligne IV-IV de la figure 1, du poste de traitement à l'infrarouge.

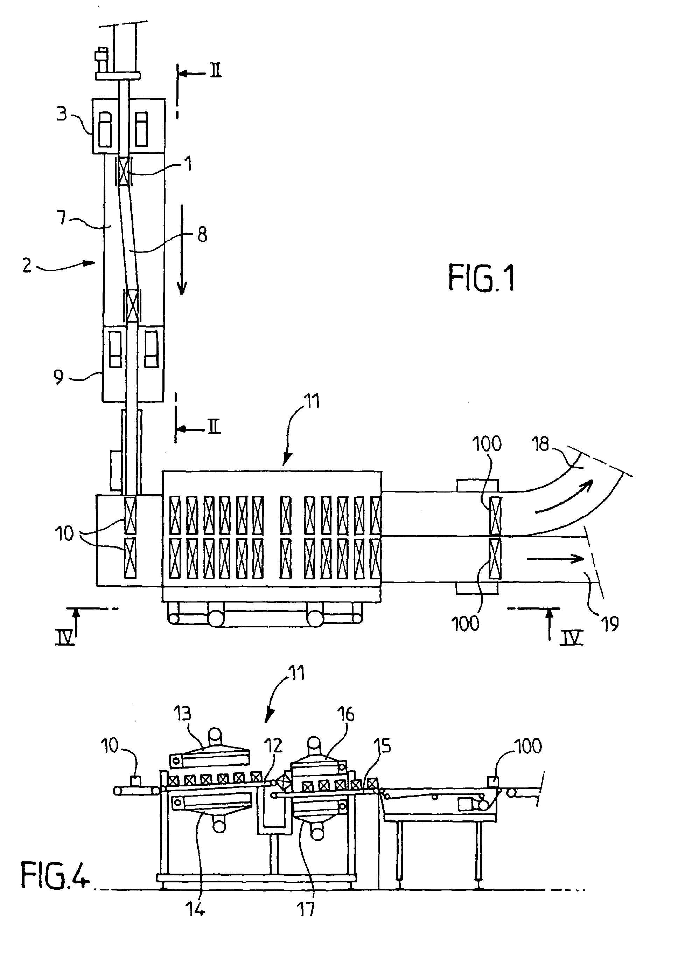

Si l'on se réfère tout d'abord à la figure 1, on peut voir une partie de la chaîne de fabrication du pain de mie conforme à l'invention.

Sur cette chaîne, le pain de mie tel que 1 arrive en provenance du four de cuisson, non représenté ici, sur un poste 2 où sont éliminées les croûtes extérieures, après avoir été refroidi à une température à coeur comprise entre 20 et 30°C. De façon classique, ce refroidissement s'effectue dans une ambiance à 45-55% d'hygrométrie et à une température qui peut varier entre 15 et 35°C.

Plus précisément, c'est à ce poste 2 que sont éliminées les croûtes des quatre grands côtés du pain de mie, à l'exclusion des croûtes des deux petits côtés ou talons, qui seront éliminées lors du tranchage final.

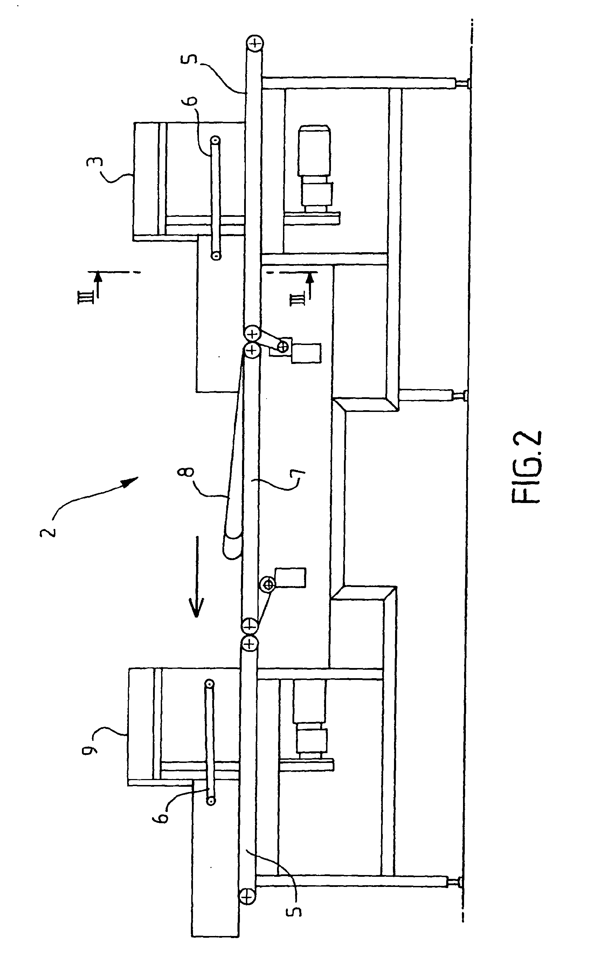

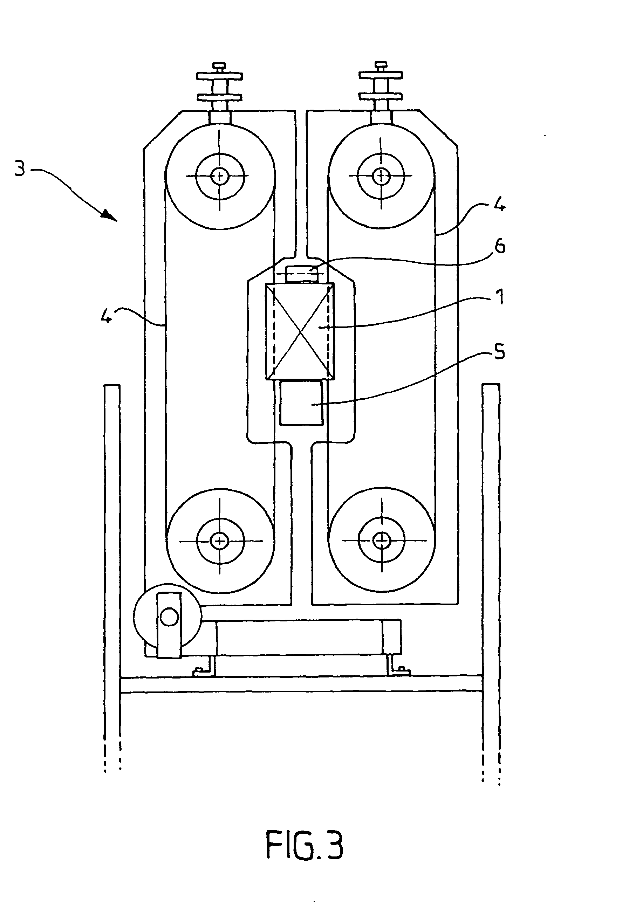

A cet effet, et ainsi qu'on peut le voir plus clairement sur les figures 2 et 3, le poste 2 est équipé à l'entrée d'un premier dispositif 3 pourvu de deux lames de scie à ruban 4 qui vont découper verticalement les deux premières croûtes latérales du pain de mie 1, tandis que celui-ci est maintenu en état d'avancement entre deux tapis roulants horizontaux 5 et 6.

Le pain de mie arrive ensuite sur un autre tapis horizontal 7 associé à un tapis incliné 8. Ce dernier provoque un soulèvement partiel du pain de mie qui se trouve ainsi déséquilibré et bascule de 90° avant de pénétrer dans un deuxième dispositif de coupe 9, identique au premier, où les deux autres croûtes latérales sont éliminées.

A la sortie du poste 2, le pain de mie 10 se trouve donc débarrassé de ses quatre grandes croûtes extérieures. Conformément à l'invention, il va alors subir un traitement infrarouge dans un poste 11 spécialement aménagé à cet effet, afin de lui conférer une certaine tenue, permettant notamment de le convoyer sans difficulté et ensuite de le trancher sans provoquer son écrasement.

Comme on peut le voir plus clairement sur les figures 1 et 4, les pains de mie 10 sont d'abord regroupés sur deux lignes et passent ensuite sur un premier tapis roulant sensiblement horizontal 12 entre deux plateaux infrarouge 13 et 14 disposés respectivement au-dessus et au-dessous du trajet des pains de mie. A l'extrémité du premier tapis roulant 12, les pains de mie tombent sur un second tapis roulant 15 en basculant de 90° et passent alors entre deux autres plateaux infrarouge horizontaux 16 et 17 disposés de part et d'autre de leur trajet. Le traitement infrarouge s'effectue donc en deux phases distinctes, d'abord sur deux des grandes faces opposées du pain de mie, puis sur les deux autres faces.

Le rayonnement infrarouge engendré par les plateaux 13, 14, 16 et 17 peut être constitué par un rayonnement infrarouge court dont la longueur d'onde est comprise entre 760 et 2000 nanomètres, appliquée pendant une durée comprise entre 10" et 60" lors de la première phase et pendant une durée comprise entre 5" et 60" lors de la deuxième phase.

Il peut également s'agir d'un rayonnement infrarouge moyen dont la longueur d'onde est comprise entre 2000 et 6000 nanomètres. Dans ce cas, le rayonnement sera appliqué pendant une durée comprise entre 10" et 120" lors de la première phase et pendant une durée comprise entre 5" et 100" lors de la deuxième phase.

Enfin, il pourra également s'agir d'une combinaison de rayonnement infrarouge court et de rayonnement infrarouge moyen, dans les mêmes limites de longueurs d'onde et de durée que celles indiquées ci-dessus.

A la sortie du poste de traitement infrarouge 11, les pains de mie 100 sont pourvus, sur leur périphérie, d'une fine couche qui, sans être colorée, est suffisamment durcie et déshydratée pour leur conférer une certaine rigidité. Ils sont alors séparés en deux lignes distinctes 18 et 19, aboutissant chacune à une trancheuse de type connu, non représentée ici.

Grâce au traitement infrarouge, les pains de mie 100 peuvent être tranchés facilement, sans collage, ni écrasement. C'est à ce stade que l'on élimine également, le cas échéant les petites croûtes d'extrémité ou talons, avant de procéder à l'emballage.

Le procédé et l'installation conformes à l'invention permettent donc en définitive d'obtenir des pains de mie tranchés sans croûte d'excellente qualité. On notera en outre que le traitement infrarouge provoque une pasteurisation de surface permettant d'obtenir une durée de conservation du produit emballé d'environ 14 à 18 jours.

## Revendications

1. Procédé de fabrication de pain de mie tranché sans croûte, **caractérisé en ce qu'**il consiste, après élimination des croûtes extérieures et avant tranchage, à soumettre le pain de mie à un rayonnement infrarouge pendant une durée déterminée.

2. Procédé selon la revendication 1, **caractérisé en ce que** le rayonnement infrarouge est appliqué sur le pain de mie en deux phases, d'abord sur deux de ses grandes faces opposées, puis sur les deux autres faces.

3. Procédé selon la revendication 2, **caractérisé en ce que** le rayonnement infrarouge appliqué est un rayonnement infrarouge court dont la longueur d'onde est comprise entre 760 et 2000 nanomètres, appliqué pendant une durée comprise entre 10" et 60" lors de la première phase et pendant une durée comprise entre 5" et 60" lors de la deuxième phase.

4. Procédé selon la revendication 2, **caractérisé en ce que** le rayonnement infrarouge appliqué est un rayonnement infrarouge moyen dont la longueur d'onde est comprise entre 2000 et 6000 nanomètres, appliqué pendant une durée comprise entre 10" et 120" lors de la première phase et pendant une durée comprise entre 5" et 100" lors de la deuxième phase.

5. Procédé selon les revendications 3 et 4, **caractérisé en ce que** le rayonnement infrarouge appliqué est une combinaison de rayonnement infrarouge moyen et de rayonnement infrarouge court.

6. Installation pour la mise en oeuvre du procédé selon l'une quelconque des revendications 1 à 5, comprenant notamment, à la sortie du four de cuisson, un poste (2) d'élimination des croûtes, où les quatre croûtes latérales du pain de mie sont éliminées par deux passages successifs entre des lames de coupe (4), suivi d'un poste de tranchage, où le pain de mie est tranché avant d'être emballé, **caractérisée en ce qu'**elle comprend en outre, entre le poste d'élimination des croûtes (2) et le poste de tranchage, un poste de traitement à l'infrarouge (11), où le pain de mie (10)est soumis à un rayonnement infrarouge pendant une durée prédéterminée.

7. Installation selon la revendication 6, **caractérisée en ce que** le poste de traitement à l'infrarouge (11) est équipé de panneaux infrarouge (13, 14, 16, 17) disposés horizontalement au-dessus et au-dessous du trajet des pains de mie (10).

8. Installation selon la revendication 7, **caractérisée en ce que** le poste de traitement infrarouge (11) comporte deux paires de panneaux infrarouge successives (13, 14 - 16, 17) et, entre ces deux paires de panneaux, un dispositif (12, 13) pour faire basculer le pain de mie de 90°.

## Claims

1. Method of making sliced sandwich bread without a crust, **characterised in that,** after the removal of the outer crusts and before slicing, it consists in subjecting the sandwich loaf to infrared radiation for a specific period.

2. Method according to claim 1, **characterised in that** the infrared radiation is applied to the sandwich loaf in two stages, firstly to two of its large opposite sides, then to the other two sides.

3. Method according to claim 2, **characterised in that** the infrared radiation applied is short-wave infrared radiation, the wavelength of which is included between 760 and 2000 nanometres, applied for a period of between 10 seconds and 60 seconds in the first stage and for a period of between 5 seconds and 60 seconds in the second stage.

4. Method according to claim 2, **characterised in that** the infrared radiation applied is medium-wave infrared radiation, the wavelength of which is included between 2000 and 6000 nanometres, applied for a period of between 10 seconds and 120 seconds in the first stage and for a period of between 5 seconds and 100 seconds in the second stage.

5. Method according to claims 3 and 4, **characterised in that** the infrared radiation applied is a combination of medium-wave infrared radiation and short-wave infrared radiation.

6. Plant for carrying out the method according to any one of claims 1 to 5, comprising, at the outlet of the baking oven, a crust-removing station (2) in which the four side crusts of the sandwich loaf are removed by passing it between cutting blades (4) twice in succession, followed by a slicing station in which the sandwich loaf is sliced before being packaged, **characterised in that** it moreover comprises, between the crust-removing station (2) and the slicing station, an infrared treatment station (11) in which the sandwich loaf (10) is subjected to infrared radiation for a predetermined period.

7. Plant according to claim 6, **characterised in that** the infrared treatment station (11) is provided with infrared panels (13, 14, 16, 17) disposed horizontally above and below the path of the sandwich loaves (10).

8. Plant according to claim 7, **characterised in that** the infrared treatment station (11) includes two successive pairs of infrared panels (13, 14 - 16, 17) and, between these two pairs of panels, a device (12, 13) for rotating the sandwich loaf through 90°.

## Patentansprüche

1. Verfahren zur Herstellung von geschnittenem Toastbrot ohne Kruste, **dadurch gekennzeichnet, dass** es darin besteht, nach der Entfernung der Außenkrusten und vor dem Schneiden, das Toastbrot während einer bestimmten Zeit einer Infrarotstrahlung auszusetzen.

2. Verfahren nach Patentanspruch 1, **dadurch gekennzeichnet, dass** das Toastbrot der Infrarotstrahlung in zwei Phasen ausgesetzt wird, nämlich zuerst auf zwei entgegengesetzten Längsseiten und anschließend auf den anderen zwei Seiten.

3. Verfahren nach Patentanspruch 2, **dadurch gekennzeichnet, dass** die verwendete Infrarotstrahlung eine kurze Infrarotstrahlung ist, deren Wellenlänge zwischen 760 und 2000 Nanometer liegt und die bei der ersten Phase während 10" bis 60" und bei der zweiten Phase während 5" bis 60" verwendet wird.

4. Verfahren nach Patentanspruch 2, **dadurch gekennzeichnet, dass** die verwendete Infrarotstrahlung eine mittlere Infrarotstrahlung ist, deren Wellenlänge zwischen 2000 und 6000 Nanometer liegt und die bei der ersten Phase während 10" bis 120" und bei der zweiten Phase während 5" bis 100" verwendet wird.

5. Verfahren nach Patentansprüche 3 und 4, **dadurch gekennzeichnet, dass** die verwendete Infrarotstrahlung eine Kombination von einer mittleren Infrarotstrahlung und von einer kurzen Infrarotstrahlung ist.

6. Anlage zum Ausführen des Verfahrens nach einem der Patentansprüche 1 bis 5, insbesondere mit einer am Ausgang des Backofens angeordneten Station (2) zur Entfernung der Krusten, bei der die vier Seitenkrusten des Toastbrotes entfernt werden, indem das Toastbrot zweimal zwischen aufeinander folgenden Schneidmessern (4) geführt wird, und mit einer anschließenden Schneidestation, bei der das Toastbrot vor dem Verpacken geschnitten wird, **dadurch gekennzeichnet, dass** sie außerdem zwischen der Station (2) zur Entfernung der Krusten und der Schneidestation eine Station (11) zur Infrarotstrahlungs-Behandlung umfasst, bei der das Toastbrot (10) während einer vorbestimmten Zeit einer Infrarotstrahlung ausgesetzt wird.

7. Anlage nach Patentanspruch 6, **dadurch gekennzeichnet, dass** die Station (11) zur Infrarotstrahlungs-Behandlung mit Infrarotplatten (13, 14, 16, 17) ausgerüstet ist, die oberhalb und unterhalb der Förderstrecke der Toastbrote (10) horizontal angeordnet sind.

8. Anlage nach Patentanspruch 7, **dadurch gekennzeichnet, dass** die Station (11) zur Infrarotstrahlungs-Behandlung zwei aufeinander folgende Paare von Infrarotplatten (13, 14 - 16, 17) und eine zwischen den beiden Paaren von Platten angeordnete Vorrichtung (12, 15) zum Umkippen des Toastbrots um 90° aufweist.
